# EUROPEAN PATENT SPECIFICATION

(11) **EP 1 752 366 B1**
(45) Date of publication and mention of the grant of the patent: **08.10.2008**
(21) Application number: 06076546.8
(22) Date of filing: 08.08.2006
(51) Int. Cl.: B62H 5/14

(54) **Assembly of a wheel fork and a ring lock for a bicycle, and bicycle provided with such assembly**
Anordnung einer Radgabel und eines Ringschlosses für ein Fahrrad, und Fahrrad ausgerüstet mit solch einer Anordnung
Ensemble d'une fourche de roue et d'un antivol d'anneau pour bicyclette, et une bicyclette munie avec un tel ensemble

(30) Priority: 09.08.2005 NL 1029698
(43) Date of publication of application: 14.02.2007
(73) Proprietor: Batavus B.V., 8444 AR Heerenveen (NL)
(72) Inventor: Naberman, Arend, 8281 MV Genemuiden (NL); Van der Woning, Mark Ronald, 8441 GE Heerenveen (NL)
(74) Representative: van Loon, C.J.J.

(56) References cited:
- EP-A- 0 415 499
- DE-C1- 3 444 760
- DK-C- 65 675

## Description

The invention relates to an assembly of a wheel fork and a ring lock for a bicycle, and to a bicycle provided with such an assembly.

Such an assembly is known from practice. With the known assembly, the ring lock is attached to a wheel fork of a bicycle. By means of the ring lock, the bicycle can be protected against theft through introduction of the annular segmental bolt of the ring lock between the spokes of a wheel, and to lock the bolt in this condition. As a result, the wheel is blocked.

A drawback of the known assembly is that the ring lock in locked condition can be sabotaged relatively easily. The fact is that by detaching or destroying the attachment of the ring lock to the wheel fork and/or prizing between ring lock and wheel fork, the ring lock can be turned such that the bolt comes to lie to the side of the bicycle. In this position, the bolt is well accessible to a cutting or grinding instrument. Thus, the bicycle can be stripped of its ring lock without (appreciably) damaging the bicycle.

From NL8902172 (= EP 0415499), a ring lock is known which meets the above-mentioned drawback in that the lock is largely integrated into the rear fork of the bicycle. The bolt of the ring lock of NL8902172 is included in two outer housing parts, each U-shaped in cross-section, facing each other by their open sides. Each of the two housing parts also forms a leg of the rear fork. As a result, the ring lock cannot be turned and the bolt of the lock cannot be reached with a grinding face from the side of the bicycle. When the lock is forced open, this needs to be replaced by a new unit of lock and rear fork or by an alternative conventional rear fork with a lock, which is laborious and relatively expensive. This will deter a bicycle thief from sabotaging the lock.

However, a drawback of this known ring lock integrated in the rear fork is that also, the repair or replacement of the ring lock is laborious and relatively expensive. For disassembling the lock, the rear wheel, mudguard, luggage carrier and rear fork are to be disassembled. As a rule, the whole of lock and rear fork is to be replaced in its entirety.

An object of the invention is to provide a solution according to which a ring lock cannot be easily sabotaged, while conversely, the ring lock can be simply repaired and replaced.

To this end, according to the invention, an assembly of a wheel fork and a ring lock according to claim 1 is provided.

In operative condition, the ring lock is mounted in a cavity of the wheel fork, while the side view side and the first ring surface view side of the ring lock are each, at least partly, enclosed by the wheel fork. This complicates prizing between ring lock and wheel fork and turning the ring lock such that the bolt of the ring lock comes to lie to the side of the bicycle. If a malicious person should, nevertheless, succeed in turning the lock, grinding the bolt is complicated as the parts of the wheel fork forming the cavity and enclosing the ring lock are in the way.

The cavity is open in a take-out direction from the first to the second ring surface view side. As a result, the ring lock can be disassembled from the wheel fork in a simple manner for the purpose of repair or replacement thereof, by taking the ring lock from the cavity in the take-out direction. It may then be necessary to first eliminate any blockings present which prevent taking the ring lock out in the take-out direction. Removing such blockings can be carried out more easily by a repairman in, for instance, a repair shop than by a bicycle thief in the street. Some blockings can simply be removed by having the key matching the ring lock at hand. Assembling the repaired ring lock or a replacement ring lock again is simple too, in that the ring lock can be reinserted into the cavity in a direction opposite to the take-out direction. Hence, the ring lock can be repaired and replaced in a simple manner.

Also according to the invention, a bicycle according to claim 9 is provided.

Specific embodiments of the invention are laid down in the dependent claims.

In the following, the invention is further elucidated with reference to the schematic Figures in the appended drawing.
Fig. 1 shows, in perspective, an example of an embodiment of an assembly of a wheel fork and a ring lock according to the invention in exploded condition;
Fig. 2 shows the example of Fig. 1 in partly assembled condition;
Fig. 3 shows the example of Fig. 1 in completely assembled condition;
Fig. 4 shows the example of Fig. 1 in a different view of the assembly in exploded condition;
Fig. 5 shows the example of Fig. 4 in an assembled condition, and with a bolt of the ring lock slid partly from the ring lock;
Fig. 6 shows the example of Fig. 5 in a different perspective view and with the bolt of the ring lock slid maximally from the ring lock.

The Figures show an assembly of a wheel fork 1 and a ring lock 2 for a bicycle. The wheel fork can be a rear fork, but also a front fork. The ring lock 2 is of the customary type. The ring lock is therefore substantially flat and annular, the annular shape being closed when an annular segmental bolt 3 of the ring lock is in closed condition.

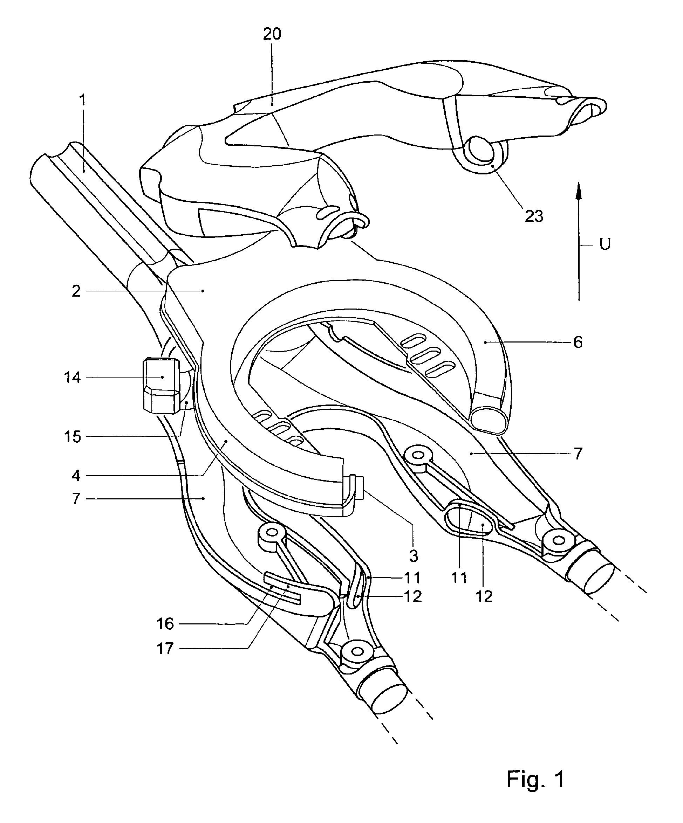

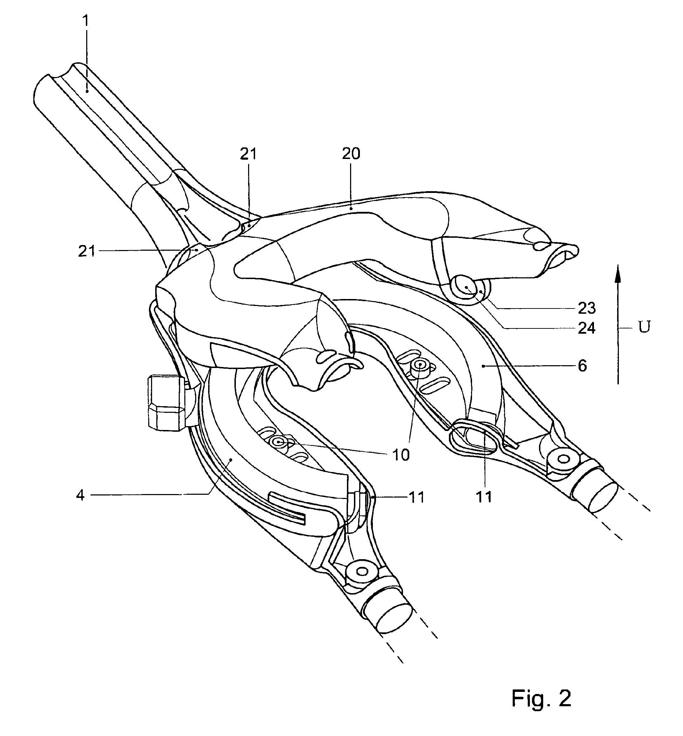

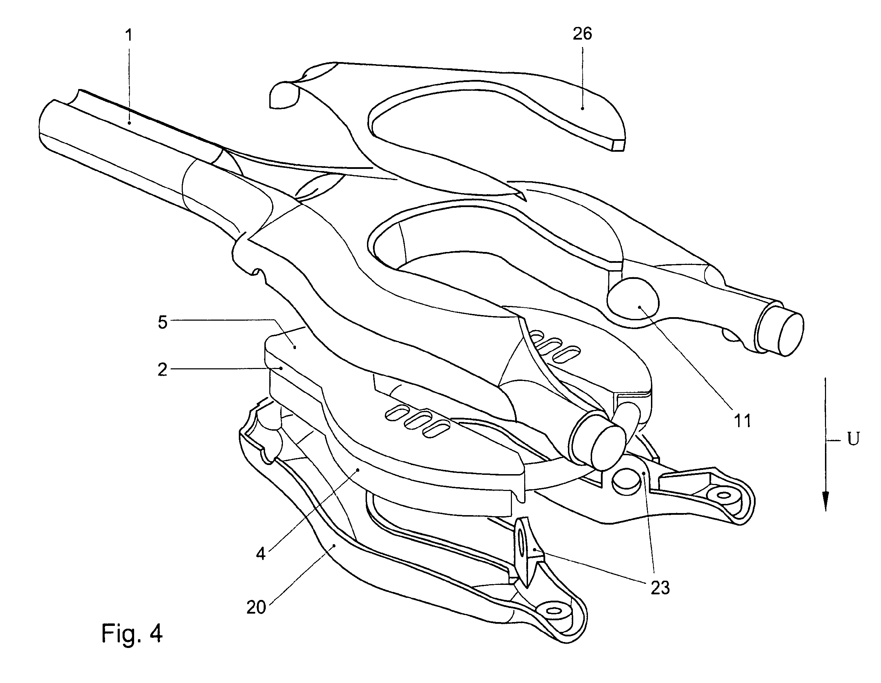

The ring lock 2 has a side view side 4, i.e. an external surface of the ring lock viewed in side view of the ring lock. The ring lock further has a first ring surface view side 5 (shown in the view of Fig. 4) and a second ring surface view side 6 (viewed in the view of Figs. 1, 2), i.e., the opposite, external surfaces of the ring lock which are viewed in top view or bottom view, as the case may be, of the flat annular shape of the ring lock.

The wheel fork 1 comprises a cavity 7 (see Fig. 1) in which the ring lock 2 can be mounted. The mounted condition is shown in Fig. 2. In the example shown, the ring lock is attached to the wheel fork by means of bolts 10. In the mounted condition, the side view side 4 and the first ring surface view side 5 of the ring lock are each, at least partly, enclosed by the wheel fork 1. As the ring lock is placed, thus enclosed, in the cavity, prizing between ring lock and wheel fork and turning the ring lock such that the bolt of the ring lock comes to lie to the side of the bicycle, is complicated. If a malicious person should nevertheless succeed in turning the ring lock, the grinding of the bolt is complicated as the parts of the wheel fork forming the cavity are in the way.

Further, the cavity 7 is open in a direction U, from the first 5 to the second 6 ring surface view side. The direction U is a take-out direction for taking the ring lock 2 from the cavity 7 for the purpose of, for instance, repairs to or replacement of the ring lock. When mounting the ring lock, the ring lock can be placed in the cavity 7 in a direction opposite to the take-out direction U. The cavity 7 being open therefore facilitates repair and replacement of the ring lock.

Instead of with the bolts 10, the ring lock can also be attached to the wheel fork with the aid of other attachment means, for instance rivets. Such attachment means also form a blocking that hinders taking the ring lock 2 from the cavity in the take-out direction U. Such a blocking forms an additional barrier for a bicycle thief wanting to sabotage the ring lock.

In the example, the two legs of the wheel fork each have a passage 12 allowing the annular segmental bolt 3 to pass when sliding the bolt into or from a housing part of the ring lock. A bounding part 11 of the passage 12 forms a pawl, formed on the respective leg of the wheel fork, which pawl prevents the bolt from being moved in slid-out condition in the take out direction U. Each of the two pawls 11 therefore also forms a blocking preventing the ring lock 2 from being taken from the cavity 7 in the take-out direction U. When the bolt 3 is not in slid-out condition, i.e. when the ring lock does not protect the bicycle against theft, the blocking by means of the pawls 11 is not active. A bicycle thief wanting to sabotage the ring lock in locked condition therefore experiences an additional barrier in the form of the pawls 11. A bicycle repairman wanting to repair or replace the ring lock experiences no barrier of the pawls 11 when the ring lock is in unlocked condition. The bicycle repairman can take the ring lock in the take-out direction U from the cavity 7, and after optional turning of the ring lock, remove the ring lock from the bicycle. Should the ring lock be in locked condition, for instance when the key of the ring lock has gone missing, as a rule, it is easier for a bicycle repairman to saw the bolt of the ring lock through in, for instance, a repair shop than it is for a bicycle thief in the street. After sawing the bolt, the repairman needs not damage the pawls of the wheel fork for removing the ring lock, so that the repairman can replace the ring lock without damaging the wheel fork.

Apart from the use of such pawls 11, there are more possibilities of using a blocking which is designed to be activated by sliding a bolt of the ring lock included in a housing part of the ring lock from a housing part of the ring lock. For instance, when bringing the bolt in a locked condition, the connecting element 15, between the bolt 3 and an operation handle 14 for the bolt, shown in the Figures, can be included in a slot 16 present in the wheel fork. An edge 17 of the slot 16 then prevents the connecting element 15, when the bolt 3 is in slid-out condition, from being moved in the take-out direction U in a manner similar to that in which the pawls 11 prevent the bolt in slid-out condition from being moved in the take-out direction U.

The assembly can further comprise a protective cap 20, detachably attached to the wheel fork 1 and/or the ring lock 2. In the example shown, in the operative condition in which the ring lock 2 is mounted in the cavity 7, the protective cap 20 encloses the second ring surface view side 6 of the ring lock completely. However, the protective cap 20 can also only partly enclose the ring surface view side 6. Such a protective cap protects the ring lock from weather influences, dirt and the like. The protective cap also further complicates breaking the ring lock open. The protective cap further gives the assembly a smoother finish so that objects such as, for instance, clothing of a cyclist catch less rapidly on the assembly.

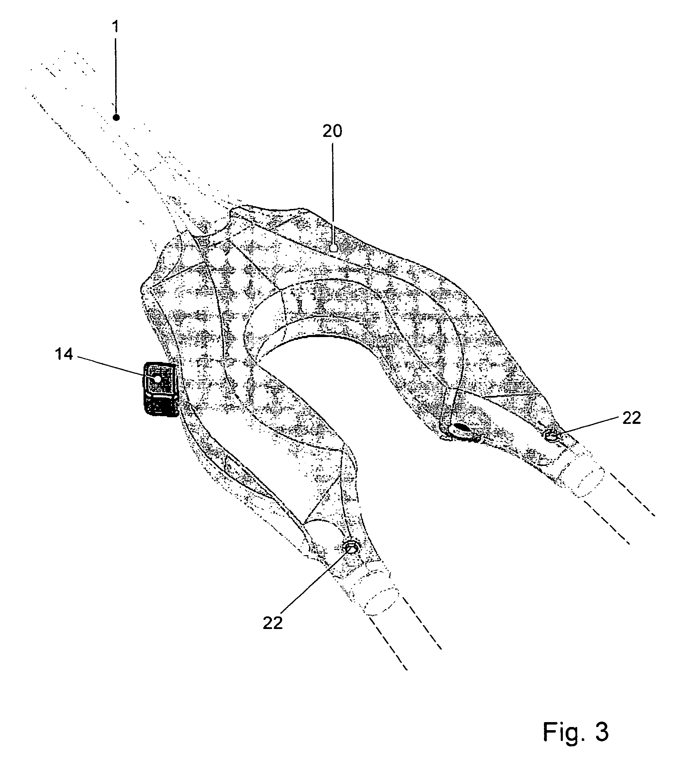

In the example shown, the protective cap is mainly horseshoeshaped. This horseshoe-shape has two legs that are connected by a connecting part of the horseshoe-shape. Adjacent the extremities of the legs, the protective cap is attached to the wheel fork 1 by means of bolts 22, see Fig. 3. Further, the protective cap hooks behind the wheel fork by an edge 21 (see Fig. 2) of the connecting part. Providing and attaching the protective cap 20 takes place by, first, hooking edge 21 behind the wheel fork, by then pivoting the protective cap around the hooking edge to the wheel fork and finally, by providing the bolts 22.

The protective cap 20 further comprises two hook parts 23. With the protective cover in the attached condition, when sliding out the bolt 3, the hook parts 23 bring the protective cap 20 in a locking condition hooked around the bolt. The fact is that in the example, the slid-out bolt extends through passages 24 in the protective cap 20 formed by the hook parts 23. Hence, the slid-out bolt prevents the protective cap from being removed. The hooked around, locked condition is removed by sliding the bolt back into the housing part. In the hooked around, locked condition, the protective cap can therefore not simply be removed by a malicious person, neither is this the case when the bolts 22 are unscrewed. As the protective cap cannot be removed, the bolts 10 too, attaching the ring lock to the wheel fork, are inaccessible to a bicycle thief.

Instead of, or in addition to the utilization of the hook parts 23 described, the protective cap 20 can also comprise locking slot. When the protective cap is mounted, this locking slot in the protective cap (not shown in the Figures) can link up with, for instance, the slot 16 in the wheel fork 1. The locking slot in the protective cap can be designed such that the connecting element 15 between the bolt 3 and the operating handle 14 is included in the locking slot when the bolt is brought into the locking condition. With the bolt 3 in the slid-out condition, the connecting element 15 prevents the protective cap 20 from being removed.

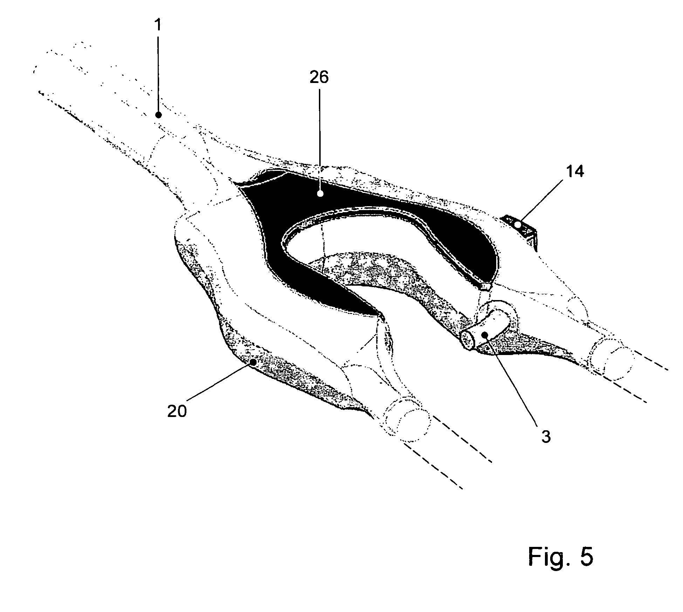

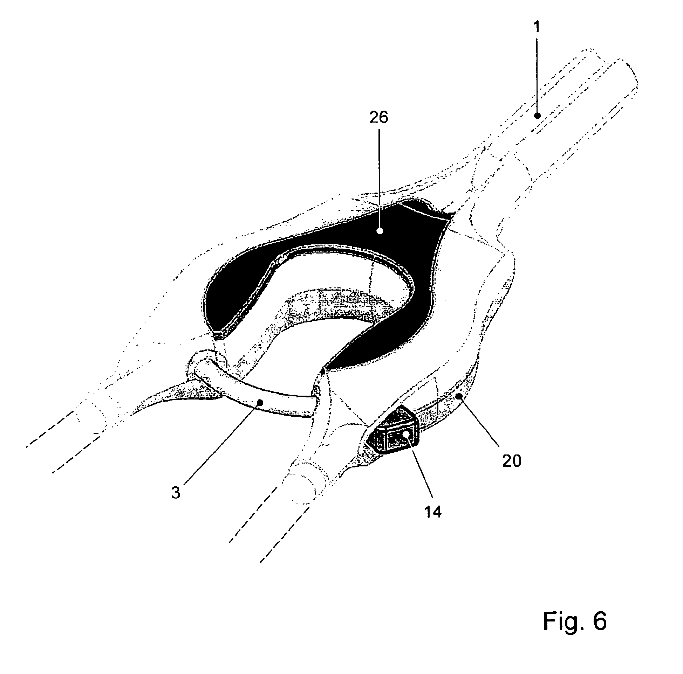

Figs. 4, 5 and 6 further show a cover cap 26 for covering the wheel fork I on the side of the wheel fork opposite the cavity. This cover cap 26 may be of plastic.

It is noted that the above-mentioned advantages of embodiments of the invention do not delimit the invention and that within the scope of the accompanying claims, various alternatives are possible. For instance, various constructions and materials for wheel fork or protective cap can be utilized. Wheel fork and/or protective cap can for instance be forged parts, of, for instance, aluminum. Also, cast pieces or deep drawn plate parts can be utilized. Further, a part of the wheel fork in which the cavity is situated can be manufactured separately. To such a wheel fork part, by means of, for instance, welding, separately manufactured leg parts of the wheel fork can then be attached. Such and similar alternatives are understood to fall within the framework of the invention as defined in the appended claims.

## Claims

1. An assembly of a wheel fork (1) and a ring lock (2) for a bicycle, which ring lock has external surfaces (4, 5, 6) which are distinguishable into, at least, a side view side (4) of the ring lock, a first ring surface view side (5) of the ring lock, and a second ring surface view side (6) of the ring lock situated opposite the first ring surface view side, wherein, in operative condition, the ring lock (2) is mounted in a cavity (7) of the wheel fork (1), in which mounted, operative condition the side view side (4) and the first ring surface view side (5) of the ring lock are each at least partly enclosed by the wheel fork (1), **characterised in that** the cavity (7) is open in a take-out direction (U) from the first to the second ring surface view side for taking the ring lock (2) in the take-out direction from the cavity (7).

2. An assembly according to claim 1, further comprising a blocking (11; 7) which, in operative condition, prevents the ring lock (2) from being taken from the cavity (7) in the take-out direction (U).

3. An assembly according to claim 2, wherein the blocking (11; 17) is designed for being activated by sliding a bolt (3) of the ring lock included in a housing part of the ring lock from the housing part of the ring lock (2).

4. An assembly according to claim 3, wherein the blocking comprises at least one pawl (11) formed on a leg of the wheel fork, which pawl prevents the bolt (3) in slid-out condition from being moved in the take-out direction (U).

5. An assembly according to claim 3 or 4, wherein the blocking comprises a slot (16) in the wheel fork which prevents a connecting element (15) between the bolt (3) and an operating handle (14) for the bolt from being moved in the take-out direction (U) when the bolt is in slid-out condition.

6. An assembly according to any one of the preceding claims, further comprising a protective cap (20) detachably attached to the wheel fork (1) and/or the ring lock (2), which cap, in operative condition with the ring lock (2) mounted in the cavity (7), encloses, at least partly, the second ring surface view side (6) of the ring lock.

7. An assembly according to claim 6, wherein the protective cap (20) comprises a hook part (23) which, with the protective cap in attached condition, when sliding a bolt 3 included in a housing part of the ring lock from the housing part, brings the protective cap (20) in a locking condition hooked around the ring lock, which hooked around, locking condition is removed when the bolt (3) is slid back into the housing part.

8. An assembly according to claim 6 or 7, wherein the protective cap (20) hooks, at least party, behind the wheel fork (1).

9. A bicycle provided with an assembly (1, 2; 1, 2, 20) according to any one of the preceding claims.

## Patentansprüche

1. Eine Anordnung aus einer Radgabel (1) und einem Ringschloss (2) für ein Fahrrad, wobei das Ringschloss Außenoberflächen (4, 5, 6) aufweiset, die unterscheidbar sind in zumindest eine Seitenansichtsseite (4) des Ringschlosses, eine erste Ringoberflächenseitenansichtsseite (5) des Ringschlosses, und eine zweite Ringoberflächenseitenansichtsseite (6) des Ringschlosses, die der ersten Ringoberflächenseitenansichtsseite gegenüberliegt, wobei im Betriebszustand das Ringschloss (2) in einem Hohlraum (7) der Radgabel (1) montiert ist, wobei im montierten Betriebszustand die Seitenansichtsseite (4) und die erste Ringoberflächenseitenansichtsseite (5) des Ringschlosses jede zumindest teilweise durch die Radgabel (1) umschlossen sind, **dadurch gekennzeichnet, dass** der Hohlraum (7) in einer Herausnahmerichtung (U) von der ersten zu der zweiten Ringoberflächenansichtsseite offen ist, um das Ringschloss (2) in der Herausnahmerichtung aus dem Hohlraum (7) heraus zu nehmen.

2. Anordnung nach Anspruch 1, ferner umfassend eine Blockierung (11; 7), die im Betriebszustand verhindert, dass das Ringschloss (2) aus dem Hohlraum (7) in der Herausnahmerichtung (U) herausgenommen wird.

3. Anordnung nach Anspruch 2, wobei die Blockierung (11; 17) eingerichtet ist, dadurch aktiviert zu werden, dass ein Bolzen (3) des Ringschlosses, der in einem Gehäuseteil des Ringschlosses aufgenommen ist, aus dem Gehäuseteil des Ringschlosses (2) geschoben wird.

4. Anordnung nach Anspruch 3, wobei die Blockierung zumindest eine an einem Bein der Radgabel gebildete Klinke (11) umfasst, die verhindert, dass der Bolzen (3) in dem herausgeschobenen Zustand in die Herausnahmerichtung (U) bewegt wird.

5. Anordnung nach Anspruch 3 oder 4, wobei die Blockierung einen Schlitz (16) in der Radgabel umfasst, der verhindert, dass ein Verbindungselement (15) zwischen dem Bolzen (3) und einem Bedienungsgriff (14) für den Bolzen in der Herausnahmerichtung (U) bewegt wird, wenn der Bolzen im herausgeschobenen Zustand ist.

6. Anordnung nach irgendeinem der vorangehenden Ansprüche, ferner umfassend eine lösbar an die Radgabel (1) und/oder das Ringschloss (2) angebrachte Schutzkappe (20), die im Betriebszustand, bei dem das Ringschloss (2) in dem Hohlraum (7) montiert ist, zumindest teilweise die zweite Ringoberflächenansichtsseite (6) des Ringschlosses umschließt.

7. Anordnung nach Anspruch 6, wobei die Schutzkappe (20) ein Hakenteil (23) umfasst, das im befestigten Zustand der Schutzkappe, wenn ein in einem Gehäuseteil des Ringschlosses aufgenommener Bolzen 3 aus dem Gehäuseteil herausgeschoben wird, die Schutzkappe (20) in einen um das Ringschloss gehakten Verriegelungszustand bringt, wobei der gehakte Verriegelungszustand gelöst wird, wenn der Bolzen (3) in das Gehäuseteil zurückgeschoben wird.

8. Anordnung nach Anspruch 6 oder 7, wobei die Schutzkappe (20) zumindest teilweise hinter der Radgabel (1) hakt.

9. Fahrrad, das mit einer Anordnung (1, 2; 1 , 2, 20) nach irgendeinem der vorangehenden Ansprüche versehen ist.

## Revendications

1. Ensemble constitué d'une fourche de roue (1) et d'un étrier anti-vol (2) pour une bicyclette, lequel étrier anti-vol présente des surfaces externes (4, 5, 6) qui peuvent être distinguées en au moins un côté latéral (4) de l'étrier anti-vol, un premier côté de surface d'étrier (5) de l'étrier anti-vol, et un second côté de surface d'étrier (6) de l'étrier anti-vol situé en face du premier côté de surface d'étrier, dans lequel, en état de fonctionnement, l'étrier anti-vol (2) est monté dans une cavité (7) de la fourche de roue (1), dans lequel état de fonctionnement monté, le côté latéral (4) et le premier côté de surface d'étrier (5) de l'étrier anti-vol sont, chacun, au moins partiellement entourés par la fourche de roue (1), **caractérisé en ce qu'**une cavité (7) est ouverte dans une direction d'extraction (U) depuis le premier côté vers le second côté de surface d'étrier en vue de prendre l'étrier anti-vol (2) dans la direction d'extraction hors de la cavité (7).

2. Ensemble selon la revendication 1, comprenant en outre un système de blocage (11 ; 7) qui, en état de fonctionnement, empêche l'étrier anti-vol (2) d'être extrait de la cavité (7) dans la direction d'extraction (U).

3. Ensemble selon la revendication 2, dans lequel le système de blocage (11 ; 17) est conçu pour être actionné en faisant coulisser un pêne (3) de l'étrier anti-vol inclus dans une partie logement de l'étrier anti-vol, à partir de la partie logement de l'étrier anti-vol (2).

4. Ensemble selon la revendication 3, dans lequel le système de blocage comprend au moins un cliquet (11) formé sur une branche de la fourche de roue, lequel cliquet empêche le pêne (3), dans un état de sortie par glissement, de se déplacer dans la direction d'extraction (U).

5. Ensemble selon la revendication 3 ou 4, dans lequel le système de blocage comprend une fente (16) ménagée dans la fourche de roue, qui empêche un élément de raccordement (15) entre le pêne(3) et une poignée de fonctionnement (14) pour le pêne de se déplacer dans la direction d'extraction (U) lorsque le pêne se trouve dans un état de sortie par glissement.

6. Ensemble selon l'une quelconque des revendications précédentes, comprenant en outre un capot de protection (20) fixé de manière détachable sur la fourche de roue (1) et/ou sur l'étrier anti-vol (2), lequel capot, en état de fonctionnement avec l'étrier anti-vol (2) monté dans la cavité (7), entoure, au moins partiellement, le second côté de surface d'étrier (6) de l'étrier anti-vol.

7. Ensemble selon la revendication 6, dans lequel le capot de protection (20) comprend une partie crochet (23) qui, avec le capot de protection dans un état fixé, lorsqu'on fait coulisser un pêne (3) inclus dans une partie logement de l'étrier anti-vol, à partir de la partie logement, amène le capot de protection (20) dans un état de blocage accroché autour de l'étrier anti-vol, lequel état de blocage par accrochage est annulé lorsque le pêne (3) est ramené par coulissement dans la partie logement.

8. Ensemble selon la revendication 6 ou 7, dans lequel le capot de protection (20) s'accroche, au moins partiellement, derrière la fourche de roue (1).

9. Bicyclette munie d'un ensemble (1, 2 ; 1, 2, 20) selon l'une quelconque des revendications précédentes.
